(19) Europäisches Patentamt / European Patent Office / Office européen des brevets

(11) **EP 4 693 815 A1**

(12) **EUROPEAN PATENT APPLICATION**
published in accordance with Art. 153(4) EPC

(43) Date of publication:
**11.02.2026   Bulletin 2026/07**

(21) Application number: **24784860.9**

(22) Date of filing: **01.04.2024**

(51) International Patent Classification (IPC):
**H02J 13/00** (2026.01)     **H02J 7/00** (2026.01)
**H02J 50/10** (2016.01)     **H02J 50/40** (2016.01)

(52) Cooperative Patent Classification (CPC):
**H02J 7/00; H02J 13/00; H02J 50/10; H02J 50/40;**
**Y02T 10/7072**

(86) International application number:
**PCT/JP2024/013404**

(87) International publication number:
**WO 2024/210075 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **05.04.2023   JP 2023061073**

(71) Applicant: **DENSO CORPORATION**
**Kariya-city, Aichi 448-8661 (JP)**

(72) Inventors:
- **YAMAGUCHI, Nobuhisa**
  **Kariya-city, Aichi 448-8661 (JP)**
- **TANI, Keisuke**
  **Kariya-city, Aichi 448-8661 (JP)**

- **OBAYASHI, Kazuyoshi**
  **Kariya-city, Aichi 448-8661 (JP)**
- **KANESAKI, Masaki**
  **Kariya-city, Aichi 448-8661 (JP)**
- **SHIBANUMA, Mitsuru**
  **Kariya-city, Aichi 448-8661 (JP)**
- **YAMADA, Hidetoshi**
  **Kariya-city, Aichi 448-8661 (JP)**
- **TAKAHASHI, Masaya**
  **Kariya-city, Aichi 448-8661 (JP)**
- **NAKAYASHIKI, Yusei**
  **Kariya-city, Aichi 448-8661 (JP)**

(74) Representative: **TBK**
**Bavariaring 4-6**
**80336 München (DE)**

(54) **CHARGING SYSTEM FOR ELECTRIC VEHICLE AND COMPUTER PROGRAM**

(57)     A charging system (100, 100A, 100B, 100C) for an electric vehicle includes: a system power source (PS) supplied to an operation zone of the electric vehicle; a plurality of power distribution lines (DL1, DL2, DL3, DL4) connected to the system power source; a plurality of charging devices (120) that are respectively disposed in a plurality of areas (AR1, AR2, AR3, AR4) obtained by dividing the operation zone, and that are supplied with power through the power distribution lines and charge the electric vehicle; a power supply control device (110, 150) that is installed in each of the power distribution lines, and that executes or stops power supply to a downstream side of the distribution line; and a power consumption controller (140) that receives information indicating peak power, and controls the power supply control device, the power consumption controller determining a charging stop area so that total power consumption of the charging devices does not exceed the peak power, and controlling the power supply control device to stop charging by the charging device disposed in the charging stop area.

# FIG.1

POWER MANAGEMENT SYSTEM — 300

100

CPU — 140 — 131 — 132 — 130

POWER CONSUMPTION CONTROLLER

MEMORY

— 133

COMMUNICATION DEVICE

PS

AR1

DL1

POWER FEEDING DEVICE — 110

POWER TRANSMISSION DEVICE — 120

POWER TRANSMISSION DEVICE — 120

AR2

DL2

POWER FEEDING DEVICE — 110

POWER TRANSMISSION DEVICE — 120

POWER TRANSMISSION DEVICE — 120

AR3

DL3

POWER FEEDING DEVICE — 110

POWER TRANSMISSION DEVICE — 120

POWER TRANSMISSION DEVICE — 120

AR4

DL4

POWER FEEDING DEVICE — 110

POWER TRANSMISSION DEVICE — 120

POWER TRANSMISSION DEVICE — 120

**Description**

[Cross Reference to Related Application]

The present application is based on Japanese Patent Application No. 2023-061073 filed on April 5, 2023, the contents of which are incorporated herein by reference.

[Technical Field]

The present disclosure relates to a charging system for an electric vehicle, and a computer program.

[Background Art]

There is known a charging system that charges an electric vehicle. When such a charging system charges a plurality of electric vehicles, charging needs to be performed so that the amount of power consumed by the charging does not exceed the amount of suppliable power. A charging system described in Patent Literature 1 acquires the amount of battery charge remaining and the destinations of electric vehicles, and determines a charging schedule of charging devices installed in houses, and thereby prevents the amount of power consumption from being excessive as a result of simultaneous charging of the plurality of charging devices.

[Citation List]

[Patent Literature]

[PTL 1] JP 2013-65265 A

[Summary of the Invention]

However, the charging system described in Patent Literature 1 determines the charging schedule for each charging device and therefore has a problem that the configuration of the charging system is complicated.
The present disclosure can be realized as the following aspect.
One aspect of the present disclosure provides a charging system for an electric vehicle. This charging system is a charging system for an electric vehicle, the charging system including: a system power source supplied to an operation zone of the electric vehicle; a plurality of power distribution lines connected to the system power source; a plurality of charging devices respectively disposed in a plurality of areas that are obtained by dividing the operation zone, and that each have a different distribution line among the power distribution lines, the plurality of charging devices being supplied with power through the power distribution lines and charging the electric vehicle; a power supply control device that is installed in each of the power distribution lines, and that executes or stops power supply to a downstream side of each of the power distribution lines; and a power consumption controller that receives information indicating peak power as an upper limit of total power suppliable to the plurality of charging devices, and controls the power supply control device, the power consumption controller determining, among the plurality of areas, a charging stop area where charging is to be stopped, so that total power consumption of the plurality of charging devices does not exceed the peak power, and controlling the power supply control device to stop the charging by a charging device of the plurality of charging devices that is disposed in the charging stop area.
A control device in this aspect determines a charging stop area so that the total power consumption of charging devices does not exceed the peak power, and controls a power feeding device to stop charging by the charging device disposed in the charging stop area, and therefore, the charging system can be prevented from having a more complicated configuration than the configuration of a charging system according to the aspect in which the execution and the stop of charging are controlled for each of charging devices.

[Brief Description of the Drawings]

The object described above and other objects, features, and advantages of the present disclosure are further clarified by the following detailed description with reference to accompanying drawings. In the accompanying drawings:

     Fig. 1 is an explanatory diagram illustrating a schematic configuration of a charging system according to the present embodiment;
     Fig. 2 is an explanatory diagram schematically illustrating how charging is performed by the charging system according to the present embodiment;
     Fig. 3 is explanatory diagrams illustrating schematic configurations of a power transmission circuit, a power feeding-side controller, and a power reception circuit of the present embodiment;
     Fig. 4 is a flowchart illustrating steps of a power consumption suppression process in a first embodiment;
     Fig. 5 is a flowchart illustrating steps of a power consumption suppression process in a second embodiment;
     Fig. 6 is a flowchart illustrating steps of a power consumption suppression process in a third embodiment;
     Fig. 7 is a flowchart illustrating steps of a power consumption suppression process in a fourth embodiment;
     Fig. 8 is an explanatory diagram illustrating a schematic configuration of a charging system according to another embodiment;
     Fig. 9 is an explanatory diagram illustrating a schematic configuration of a charging system according to another embodiment; and

Fig. 10 is an explanatory diagram illustrating a schematic configuration of a charging system according to another embodiment.

[Description of the Embodiments]

A. First embodiment:

A-1. System configuration:

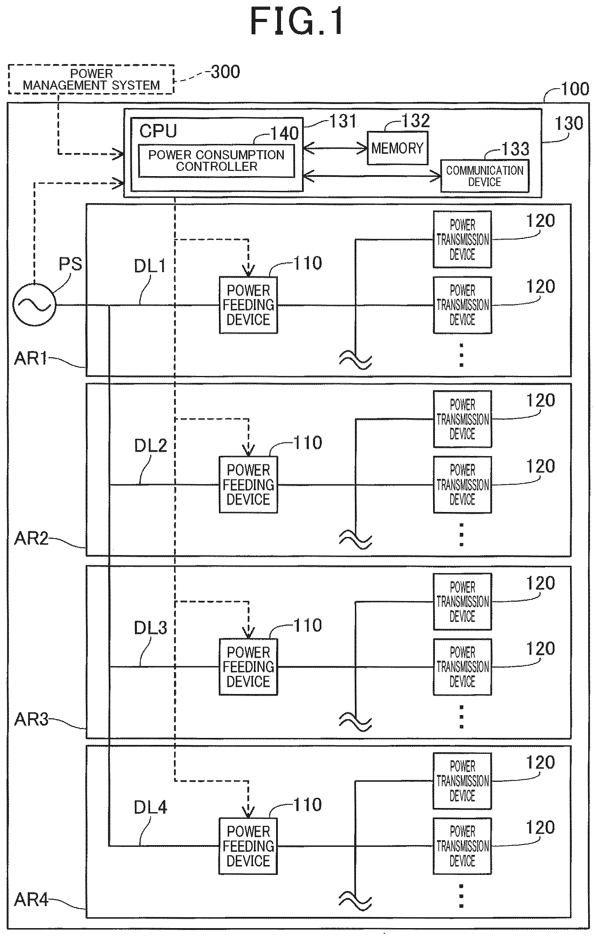

A charging system 100, according to the present embodiment, illustrated in Fig. 1 is a system for charging an electric vehicle operated in an operation zone designated in advance. In the present embodiment, the electric vehicle is capable of autonomously determining an operation route thereof, using AI having performed learning in advance, and is configured as an AGV (Automatic Guided Vehicle) that is operated in an operation zone within a factory or a warehouse. The charging system 100 includes a system power source PS, a plurality of power distribution lines DL1, DL2, DL3, and DL4, a plurality of power feeding devices 110, a plurality of power transmission devices 120, and a control device 130.

The system power source PS is an AC power source supplied with power through a power grid of a power company or the like. To the system power source PS are connected the power distribution lines DL1, DL2, DL3, and DL4. The system power source PS is not limited to the power grid of a power company or the like, and may be an AC power source supplied with power generated by self-power generation of a factory.

The power transmission device 120 is supplied with power through any one of the power distribution lines DL1, DL2, DL3, and DL4, and transmits power to a power reception circuit, described later, of the electric vehicle. The power transmission device 120 corresponds to a "charging device" of the present disclosure. A specific configuration of the power transmission device 120 will be described later.

The power transmission devices 120 are respectively disposed in a plurality of areas AR1, AR2, AR3, and AR4 obtained by dividing the operation zone. The areas are sectioned, for example, by floors of a factory. Alternatively, the areas may be sectioned by steps or partitions on the same floor. Each area has a different power distribution line from the other areas, and the power transmission devices 120 installed in the same area are supplied with power through a common power distribution line. The division of the operation zone is not limited to four areas, and the operation zone may be divided into two, three, or 5 or more areas.

The power feeding device 110 is installed in each power distribution line. In the present embodiment, one power feeding device 110 is installed in each area. The power feeding device 110 converts AC power supplied from the system power source PS to high-frequency AC power and supplies the high-frequency AC power to the power transmission device 120. The power feeding device 110 also stops the power supply to the power transmission device 120 by being controlled by the control device 130. Thus, the power feeding device 110 performs or stops the power supply to the downstream side of the power feeding device 110. The power feeding device 110 corresponds to a "power supply control device" of the present disclosure. A specific configuration of the power feeding device 110 will be described later.

The control device 130 is configured as a computer including a CPU 131, a memory 132, and a communication device 133. The CPU 131 functions as a power consumption controller 140 by performing a program stored in the memory 132 in advance.

The power consumption controller 140 acquires, via the communication device 133, from the system power source PS, information on the present total power consumption of the power transmission devices 120 (hereinafter, also called "power consumption information"). The power consumption controller 140 also acquires, via the communication device 133, from a power management system 300, information indicating the peak power (hereinafter, also called "peak power information") as the upper limit of the total power suppliable to the power transmission devices 120. The power management system 300 is a system that is located outside the charging system 100 and manages the power supply in a larger power grid including the system power source PS. The power management system 300 includes, for example, a self-power generation supply system of a factory and a system managed by an aggregator of a VPP (Virtual Power Plant). The power consumption controller 140 controls the power supply to the power transmission devices 120 by controlling the power feeding devices 110, using the power consumption information and the peak power information, so that the total power consumption of the power transmission devices 120 does not exceed the peak power.

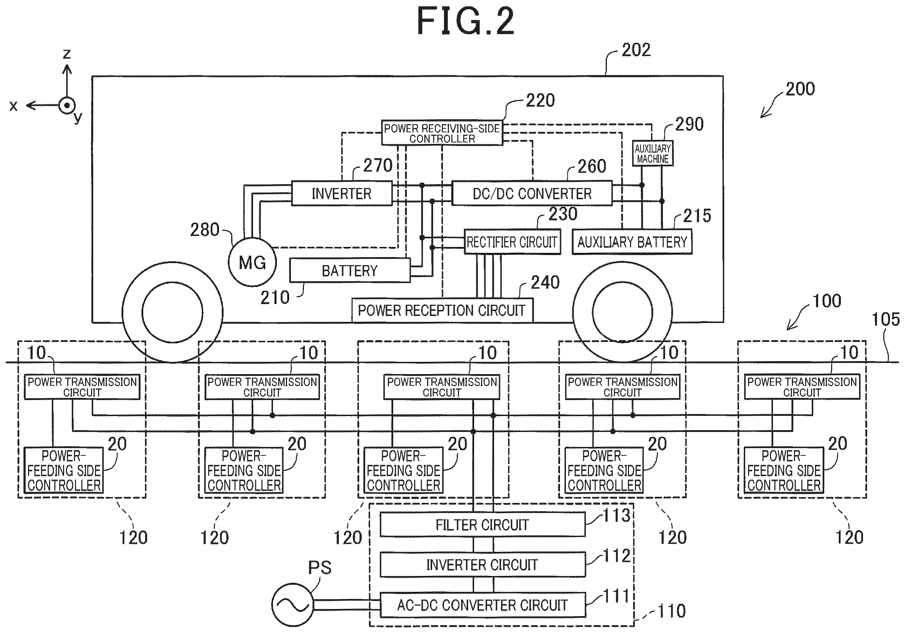

The charging performed between the charging system 100 according to the present embodiment and an electric vehicle 202 will be specifically described with reference to Fig. 2. In the present embodiment, as illustrated in Fig. 2, the electric vehicle 202 is charged when travelling on a travel road 105 having the charging system 100 embedded therein. The phrase "travelling on a travel road 105" includes, in addition to the cases in which the electric vehicle 202 moves, the cases in which the electric vehicle 202 is stopped around a fixed facility, such as a delivery robot and a conveyor, for example, due to transshipment of goods. In Fig. 2, the x-axis direction shows the travelling direction of the electric vehicle 202, the y-axis direction shows the width direction of the electric vehicle 202, and the z-axis direction shows the vertically upward direction.

The AC power supplied from the system power source PS is converted to high-frequency AC power by an AC-DC converter circuit 111, an inverter circuit 112, and a filter circuit 113 of the power feeding device 110.

More specifically, the AC power supplied from the system power source PS is rectified and converted to DC power by the AC-DC converter circuit 111, converted to high-frequency AC power by the inverter circuit 112, and extracted, by the filter circuit 113, as high-frequency AC power having a previously set frequency band.

The power feeding device 110 is connected in parallel with a plurality of power transmission devices 120 installed along the x-direction in the ground of the travel road 105, and supplies the high-frequency AC power to the power transmission devices 120. The power transmission devices 120 may be installed in a place other than in the ground of the travel road 105, for example, on a side surface of a conveyance facility.

Each power transmission device 120 includes a power transmission circuit 10 and a power feeding-side controller 20. The power feeding-side controller 20 switches the state of the power transmission circuit 10 to either a first state or a second state, makes the power transmission circuit 10 resonant to supply power to a power reception device 200 in the second state, and makes the power transmission circuit 10 non-resonant to limit the power supply to the power reception device 200 in the first state. Specific configurations of the power transmission circuit 10 and the power feeding-side controller 20 will be described later.

The electric vehicle 202 includes a battery 210, an auxiliary battery 215, a power receiving-side controller 220, a rectifier circuit 230, a power reception circuit 240, a DC/DC converter circuit 260, an inverter circuit 270, a motor generator 280, and an auxiliary machine 290. The power reception device 200 does not necessarily have to include the auxiliary machine 290, and, in this case, does not necessarily have to include the auxiliary battery 215 and the DC/DC converter circuit 260 either. In the present embodiment, the power reception circuit 240 is set at a position facing the travel road 105, for example, on a lower surface of the electric vehicle 202. When the power transmission circuit 10 is disposed on a side surface of a fixed facility, the power reception circuit 240 may be set on a side surface of the electric vehicle 202. The power reception circuit 240, which will be described later, includes a power reception coil and a capacitor that form a resonant circuit. The power reception circuit 240 is connected to the rectifier circuit 230, and the AC power received by the power reception circuit 240 is converted to DC power. Connected to the output of the rectifier circuit 230 are the battery 210, the high-voltage side of the DC/DC converter circuit 260, and the inverter circuit 270. Connected to the low-voltage side of the DC/DC converter circuit 260 are the auxiliary battery 215 and the auxiliary machine 290. Connected to the inverter circuit 270 is the motor generator 280. The DC power output from the rectifier circuit 230 can be used for charging the battery 210 and driving the motor generator 280 via the inverter circuit 270. The DC power output from the rectifier circuit 230 is also usable for charging the auxiliary battery 215 and driving the auxiliary machine 290 by stepping down the DC power using the DC/DC converter circuit 260.

The battery 210 is a secondary battery that outputs relatively high DC power, for driving the motor generator 280, at, for example, a voltage of several tens to several hundreds of volts. The motor generator 280 acts as a three-phase AC motor and generates driving force for the travel of the electric vehicle 202. The motor generator 280 acts as a generator and regenerates power during deceleration of the electric vehicle 202. When the motor generator 280 acts as a motor, the inverter circuit 270 converts the power of the battery 210 to three-phase AC power and supplies the three-phase AC power to the motor generator 280. When the motor generator 280 acts as a generator, the inverter circuit 270 converts the three-phase AC power regenerated by the motor generator 280 to DC power and supplies the DC power to the battery 210.

The DC/DC converter circuit 260 converts the output of the battery 210 to power having a voltage lower than the output voltage of the battery 210, for example, 12 V, and supplies the power to the auxiliary battery 215 and the auxiliary machine 290. The auxiliary battery 215 is a secondary battery for driving the auxiliary machine 290, and the voltage of the auxiliary battery is relatively low. The auxiliary machine 290 includes peripheral equipment such as an air conditioner, an electronic power steering device, a headlight, a direction indicator, and a wiper of the electric vehicle 202, and various accessories of the electric vehicle 202.

The power receiving-side controller 220 controls various components as well as the inverter circuit 270 in the electric vehicle 202. The power receiving-side controller 220 controls the power reception circuit 240 to receive power, when power is received by wireless power transfer during the travel.

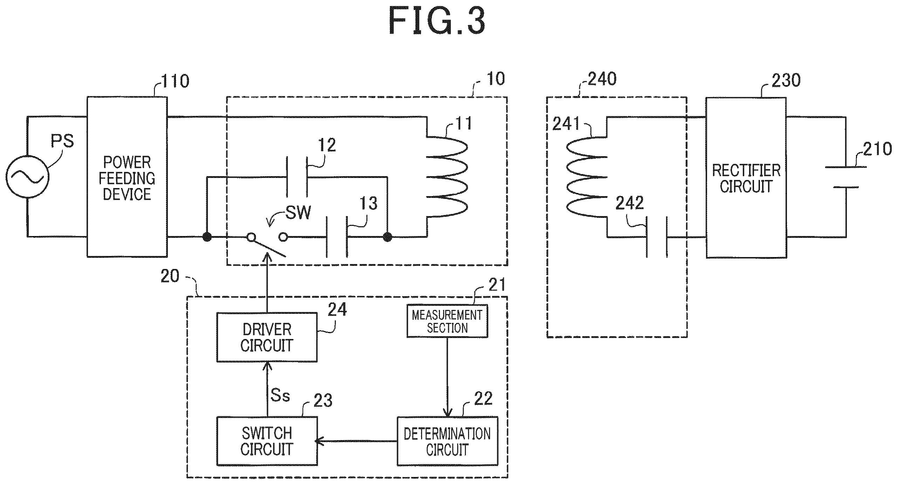

Fig. 3 is explanatory diagrams illustrating schematic configurations of the power transmission circuit 10, the power feeding-side controller 20, and the power reception circuit 240. The power transmission circuit 10 includes a power transmission coil 11, two capacitors 12, 13, and a switch SW. The capacitor 12 and the power transmission coil 11 are connected in series. The capacitor 13 and the switch SW are connected in series, and the capacitor 13 and the switch SW connected in series are connected in parallel with the capacitor 12. The power transmission coil 11 and the two capacitors 12, 13 form a resonant circuit. The power reception circuit 240 includes a power reception coil 241 and a capacitor 242 connected in series, and the power reception coil 241 and the capacitor 242 form a resonant circuit.

The capacitance of the capacitor 12 is defined as C1, the capacitance of the capacitor 13 as C2, the inductance of the power transmission coil 11 as L1, and the electrical resistance of the wiring as R. An impedance Zon of the power transmission circuit 10 is represented by the equation:

$$Zon = R + j\ (\omega L1 - 1/\omega Cg).$$

Here, when the switch SW is off, the capacitor 13 is cut off, and therefore:

$$Cg = C1,$$

on the other hand,
when the switch SW is on, the capacitor 13 is connected, and therefor:

$$Cg = C1 + C2.$$

In the equation, $\omega$ is angular frequency, and represented as $\omega = 2\pi f$, with the operating frequency of the power transmission circuit 10 defined as f. The power transmission coil 11 is magnetically coupled with the power reception coil 241. Hereinafter, magnetic coupling is also called "coupling". The inductance L1 of the power transmission coil 11 changes according to the relative positional relationship with the power reception coil 241. When the inductance of the power transmission coil 11 not coupled with any coil is defined as L41 and the inductance of the power reception coil 241 not coupled with any coil is defined as L241, the inductance L1 of the power transmission coil 11 is represented by the equation:

$$L1 = L41 \pm k(L41 \times L241)^{1/2}.$$

Here, k is a coupling coefficient, is determined according to the relative positional relationship between the power transmission coil 11 and the power reception coil 241, and when the power transmission coil 11 comes closest to the power reception coil 241, the coupling coefficient k becomes the largest. As to the plus minus sign ($\pm$) before the second term in the equation, plus is applied when the power transmission coil 11 and the power reception coil 241 have the same winding direction, and minus is applied when the coils have opposite directions.

The power feeding-side controller 20 includes a measurement section 21, a determination circuit 22, a switch circuit 23, and a driver circuit 24. The measurement section 21 is a sensor that measures a physical quantity of the power transmission coil 11. The physical quantity is an index indicating the degree of resonance of the resonant circuit including the power transmission coil 11 and the capacitors 12, 13. In the present embodiment, the voltage at both ends of the power transmission coil 11 is used as the physical quantity. Meanwhile, a plurality of types of physical quantities are usable as the physical quantity. A physical quantity other than the voltage at both ends of the power transmission coil 11 used in the present embodiment, for example, the current that flows through the power transmission coil 11, the magnetic flux generated by the power transmission coil 11, the voltage at both ends of the capacitor 12, the current that flows through the capacitor 12 may also be used. When the switch SW is on, the voltage at both ends of the capacitor 13 or the current that flows through the capacitor 13 may also be used. The voltage at both ends of the power transmission coil 11 obtained when the switch SW is off is defined as off-voltage Voff, and the voltage at both ends of the power transmission coil 11 obtained when the switch SW is on is defined as on-voltage Von. The detected physical quantity may be varied between the states on and off of the switch SW. For example, when the switch SW is off, the voltage at both ends of the power transmission coil 11 may be used as the detected physical quantity, and when the switch SW is on, the current that flows through the power transmission coil 11 or the voltage at both ends of the capacitor 12, other than the voltage at both ends of the power transmission coil 11, may also be used as the detected physical quantity.

The determination circuit 22 acquires whether the off-voltage Voff obtained when the switch SW is off is greater than or equal to or less than a threshold value Vth_off_L or Vth_off_H, and whether the on-voltage Von obtained when the switch SW is on is greater than or equal to or less than a threshold value Vth_on_L or Vth_on_H. When the off-voltage Voff is greater than or equal to the threshold value Vth_off_L or Vth_off_H, a signal Soff is set to a high level (hereinafter, called [H]), and when the off-voltage Voff is less than the threshold value, the signal Soff is set to a low level (hereinafter, called [L]). When the on-voltage Von is greater than or equal to the threshold value Vth_on_L or Vth_on_H, a signal Son is set to [H], and when the on-voltage Von is less than the threshold value, the signal Son is set to [L].

The switch circuit 23 determines the value of a switching signal Ss for switching the switch SW between on and off according to the value of the signal Soff or Son. The driver circuit 24 drives the switching between on and off of the switch SW according to the switching signal Ss as an output of the switch circuit 23. The switch SW may be one, such as a relay, that switches a mechanical contact by an external instruction, and may also be configured to include a semiconductor element such as a MOS-FET and an analog switch.

A-2. Power consumption suppression process

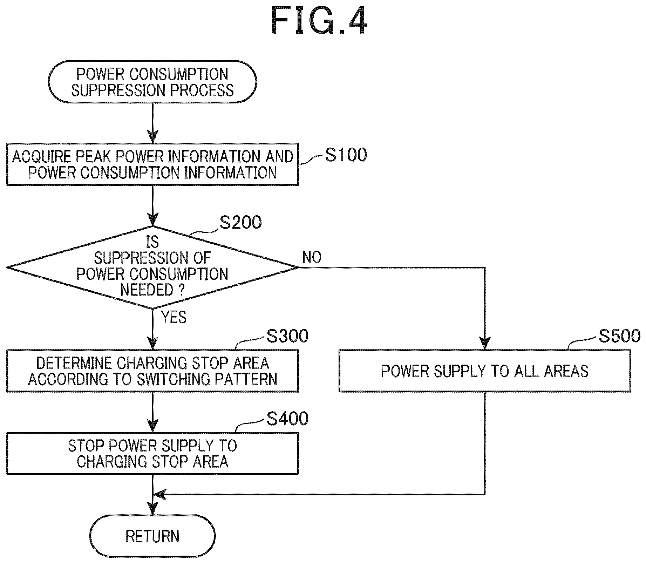

The power consumption controller 140 preforms a power consumption suppression process illustrated in Fig. 4, and thereby controls the power supply to the power transmission devices 120 by controlling the power feeding devices 110 so that the power consumption of the power transmission devices 120 does not exceed the peak power. The power consumption suppression process is started along with the start of power supply to the operation zone. The power consumption controller 140 repetitively preforms the power consumption suppression process while power is supplied to the operation zone.

In step S100, the power consumption controller 140 acquires the peak power information and the power consumption information. In the present embodiment, the power consumption controller 140 acquires the peak power information from the power management system 300. In addition, the power consumption controller 140 acquires the power consumption information from the system power source PS.

In step S200, the power consumption controller 140 determines whether the charging-based power consumption needs to be suppressed in light of the peak power.

When the suppression of power consumption is determined to be needed (step S200: Yes), the power consumption controller 140 determines a charging stop area according to a switching pattern (step S300). The charging stop area means, among the areas AR1 to AR4, an area where the power supply from the system power source PS is stopped. The switching pattern means, in the present embodiment, a pattern set in advance and stored in the memory 132, and indicating an order of selecting charging stop areas and a time for stopping the charging in the charging stop areas. The switching pattern has preferably been determined in consideration of, for example, a regular operation schedule of the electric vehicle 202 so as not to affect the operation of the electric vehicle 202.

In step S400, the power consumption controller 140 controls the power feeding device 110 installed in the charging stop area to stop the power supply to the charging stop area. In the present embodiment, the power consumption controller 140 stops the power supply to the charging stop area, and then resumes the power supply to the charging stop area after the lapse of a certain time set by the switching pattern.

On the other hand, when the suppression of power consumption is determined not to be needed (step S200: No), the power consumption controller 140 supplies power to all the areas (step S500).

After the end of step S400 or S500, the power consumption controller 140 performs step S100 again.

The charging system 100 according to the embodiment described above determines the charging stop area so that the total power consumption of the power transmission devices 120 does not exceed the peak power, and controls the power feeding device 110 to stop the charging by the power transmission device 120 disposed in the charging stop area. Therefore, the charging system 100 can be prevented from having a more complicated configuration than the configuration of a charging system according to the aspect in which the execution and the stop of charging are controlled for each of power transmission devices 120.

Further, the power transmission device 120 includes the power transmission circuit 10 for transmitting power in a wireless manner to the power reception circuit 240 of the electric vehicle 202, and therefore, the power transmission device 120 installed on a fixed facility or the power transmission device 120 installed in the ground can charge the electric vehicle 202 when being closer to the power reception circuit 240 of the electric vehicle 202 than a predetermined distance. Therefore, the electric vehicle 202 is more frequently charged than an electric vehicle configured to visit a place for charging and be charged there, and there is a high possibility that charging had been performed in an area designated as a charging stop area, despite charging being intended to be stopped therein. Thus, the effect of suppressing the power consumption by stopping the charging can be prevented from being lowered.

Further, the power transmission device 120 switches between a power transmittable state and a power transmission standby state according to the degree of coupling between the power reception circuit 240 and the power transmission device 120, and therefore, the time of the power transmittable state in which the power consumption is high can be reduced. Thus, the power consumption of the charging system 100 can further be suppressed.

Further, the power consumption controller 140 determines the charging stop area according to the switching pattern set in advance, and therefore, charging can be stopped by a schedule obtained considering in advance the impact on operation of the electric vehicle 202 caused by the stop of charging and it is possible to suppress the impact on operation of the electric vehicle 202 caused by the stop of charging.

B. Second embodiment:

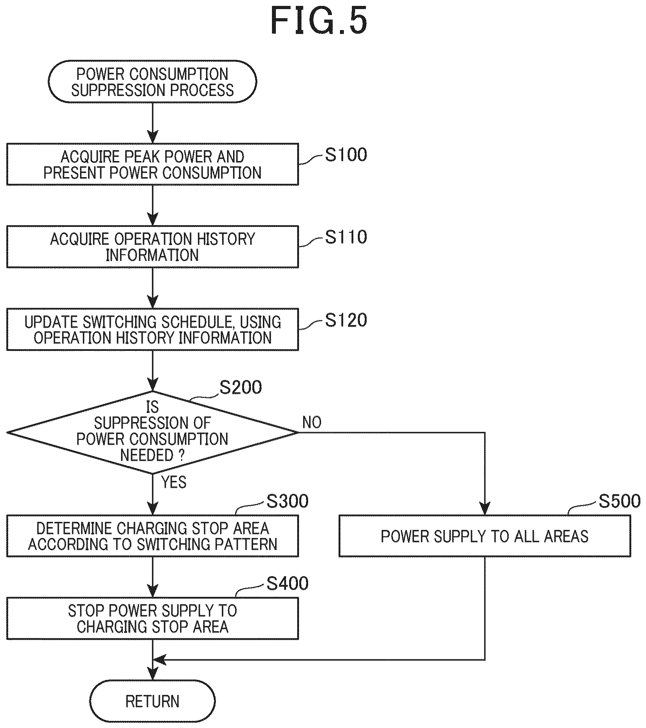

A charging system 100 according to a second embodiment is different from the charging system 100 according to the first embodiment in executing, as illustrated in Fig. 5, steps S110 and S120 after step S100 in a power consumption suppression process. The system configuration and the other procedures of the power consumption suppression process of the charging system 100 according to the second embodiment are the same as those of the charging system 100 according to the first embodiment, and therefore, identical reference signs are assigned to identical components and identical procedures, and description of the details thereof is omitted.

In step S110, a power consumption controller 140 acquires, via a communication device 133, from each of electric vehicles 202, information indicating an operation history of the electric vehicle 202 (hereinafter, also called "operation history information"). The operation history information includes, for example, information indicating whether the operation of the electric vehicle 202 has been stopped due to shortage of power.

In step S120, the power consumption controller 140 updates a switching pattern, using the operation history information acquired. In the present embodiment, when acquiring the operating history information indicating that the operation of any of the electric vehicles 202 is stopped due to shortage of power, the power consumption controller 140 updates the switching pattern, for example, so as to shorten the charging stop time in an area where the electric vehicle 202 has been operated. By thus updating the switching pattern, the power consumption controller 140 can determine a charging stop area by an appropriate switching pattern according to the operation states of the electric vehicles 202.

The charging system 100 according to the second embodiment described above updates the switching pattern, using the operation history information, and therefore can determine the power failure stop area by an appropriate switching pattern according to the operation states of the electric vehicles 202, and further suppress the impact on operation of the electric vehicles 202 caused by the stop of charging while suppressing the power consumption.

C. Third embodiment:

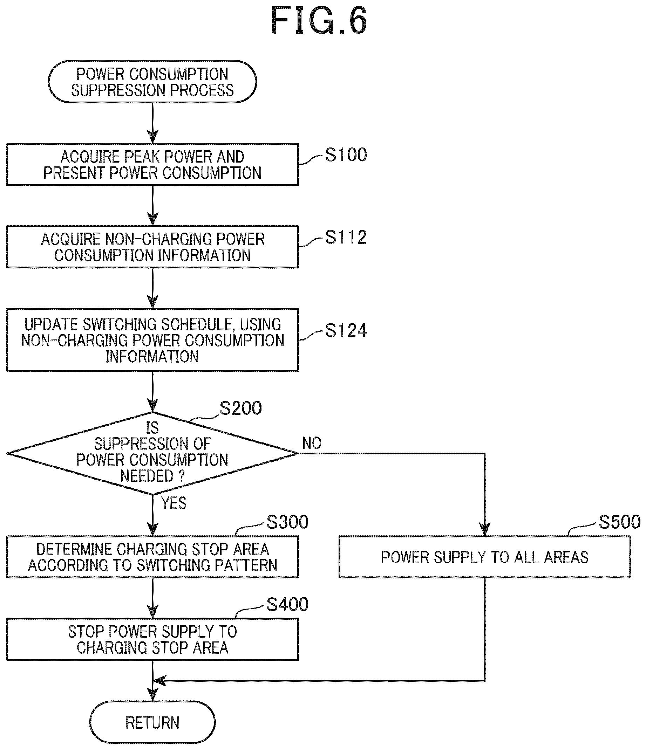

A charging system 100 according to a third embodiment is different from the charging system 100 according to the second embodiment in executing, as illustrated in Fig. 6, steps S112 and S122 instead of steps S110 and S120 illustrated in Fig. 5. The system configuration and the other procedures of a power consumption suppression process of the charging system 100 according to the third embodiment are the same as those of the charging system 100 according to the second embodiment, and therefore, identical reference signs are assigned to identical components and identical procedures, and description of the details thereof is omitted.

In step S112, a power consumption controller 140 acquires, via a communication device 133, from a power management system 300, information on non-charging-device-120-based power consumption (hereinafter, also called "non-charging power consumption information) out of power consumption in an operation zone of electric vehicles 202. The non-charging power consumption information includes, for example, information on power consumption by a production facility or a delivery robot installed in a factory.

In step S122, the power consumption controller 140 updates a switching pattern, using the non-charging power consumption information. In the present embodiment, when the operation of a facility, other than the power transmission devices 120, such as a production facility and a delivery robot is stopped and the power consumption is low, the power consumption controller 140 can reduce the amount to be suppressed of the charging-based power consumption, and therefore updates the switching pattern so as to shorten the charging stop time in a charging stop area. By thus updating the switching pattern, the power consumption controller 140 can determine the charging stop area by an appropriate switching pattern according to the power consumption of the entire operation place.

The charging system 100 according to the third embodiment described above updates the switching pattern, using the operation history information, and therefore can shorten the charging stop time in the charging stop area when the power consumption of a facility other than the power transmission devices is low, and the charging system can further suppress the impact on operation of the electric vehicles 202 caused by the stop of charging while suppressing the power consumption.

D. Fourth embodiment:

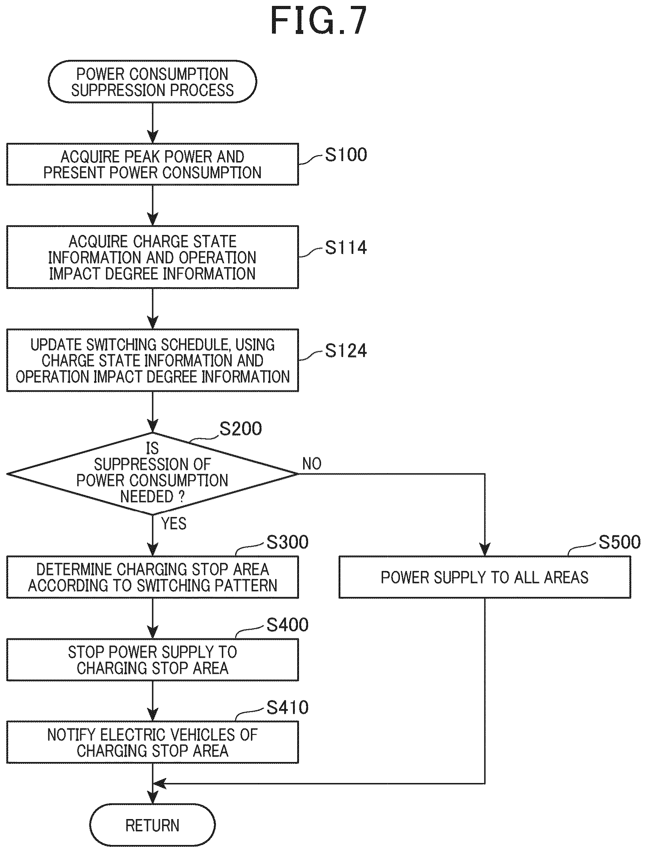

A charging system 100 according to a fourth embodiment is different from the charging system 100 according to the third embodiment in executing, as illustrated in Fig. 7, steps S114 and S124 instead of steps S112 and S122 illustrated in Fig. 6, and in executing step S410 after step S400. The system configuration and the other procedures of a power consumption suppression process of the charging system 100 according to the fourth embodiment are the same as those of the charging system 100 according to the third embodiment, and therefore, identical reference signs are assigned to identical components and identical procedures, and description of the details thereof is omitted.

In step S114, a power consumption controller 140 acquires information indicating the charge states of batteries 210 of electric vehicles 202 (hereinafter, called "charge state information") and information that is set for each electric vehicle 202 in advance and that indicates the degree of impact on operation caused when the electric vehicle 202 is stopped (hereinafter, called "operation impact degree information"). In the present embodiment, the power consumption controller 140 acquires the charge state information sent from each electric vehicle 202. In addition, the power consumption controller 140 acquires the operation impact degree information stored in a memory 132 in advance. The operation impact degree information may be sent together with the charge state information from each electric vehicle 202.

In step S124, the power consumption controller 140 updates a switching pattern, using the charge state information and the operation impact degree information. In the present embodiment, the power consumption controller 140 updates the switching pattern, using the charge state information, so as to shorten the charging stop time in an area where the electric vehicle 202 with the battery 210 having little power left is operated. Further, when there are multiple of the electric vehicles 202 with the batteries 210 having little power left, the power consumption controller 140 updates the switching pattern, using the operation impact degree information, so as to preferentially shorten the charging stop time in an area where, among the electric vehicles 202 with the batteries 210 having little power left, the electric vehicle 202 having a high degree of impact on operation when stopped is operated. By thus updating the switching pattern, the power consumption controller 140 can determine a charging stop area by an appropriate switching pattern according to the degree of impact on operation caused by the stop of charging.

In step S410, the power consumption controller 140 notifies the electric vehicles 202 of information indicating which area among a plurality of areas AR1 to AR4 is determined to be the charging stop area and has the charging by a power transmission device 120 stopped therein. Using the information, each electric vehicle 202 can, for example, be charged by temporarily moving, according to the charge state of the electric vehicle 202, from a prescribed operation area to an area where charging is not stopped.

The charging system 100 according to the fourth embodiment described above updates the switching pattern, using the charge state information, and therefore can shorten the charging stop time in an area where the electric vehicle 202 with the battery 210 having little power left is operated, and further suppress the impact on operation of the electric vehicles 202 caused by the stop of charging while suppressing the power consumption.

Further, the charging system 100 updates the switching pattern, using the operation impact degree information, and therefore, when there are multiple of the electric vehicles 202 with the batteries 210 having little power left, the charging system can preferentially shorten the charging stop time in an area where the electric vehicle 202 having a high degree of impact on operation when stopped is operated. Therefore, the charging system can further suppress the impact on operation of the electric vehicles 202 caused by the stop of charging while suppressing the power consumption.

Further, since the charging system 100 notifies the electric vehicles 202 of the information indicating which area among the plurality of areas AR1 to AR4 is determined to be the charging stop area and has the charging by the power transmission device 120 stopped therein, each electric vehicle 202 can, as necessary, be charged by moving to an area where charging is not stopped. Therefore, the charging system can further suppress the impact on operation of the electric vehicles 202 caused by the stop of charging while suppressing the power consumption.

E. Other embodiments:

(E1) In the embodiments, the charging system 100 charges the electric vehicle 202 by wireless power transfer. However, the present disclosure is not limited to this configuration. The charging system 100 may be configured to include, instead of the power transmission device 120, a charger having a charging connector and charge by contact the electric vehicle having a power reception connector instead of the power reception circuit 240. Further, the charging system 100 may be configured to include a place for charging by wireless power transfer or by contact in a part of each area and charge only the electric vehicle that comes to the place for charging.

Further, the charging system 100 may perform charging by applying to each area a different charging method among charging by wireless power transfer, charging by contact, and charging in a charging location. A charging system 100 having such a configuration can also be prevented from having a complicated configuration.

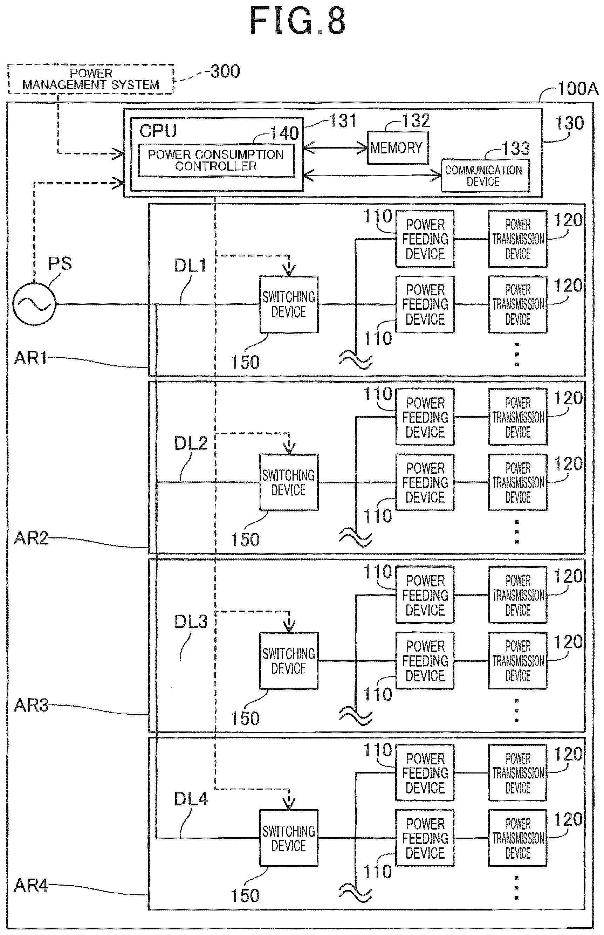

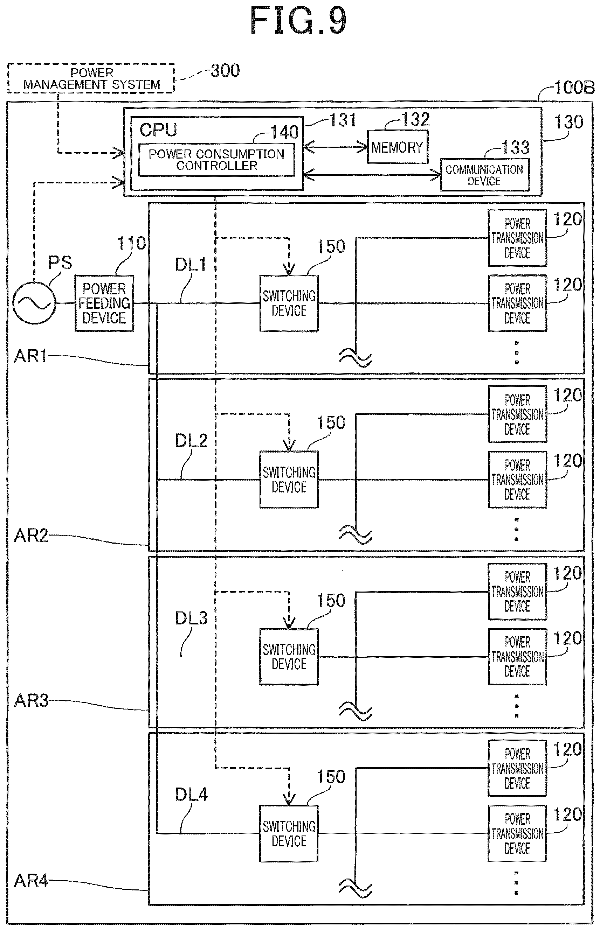

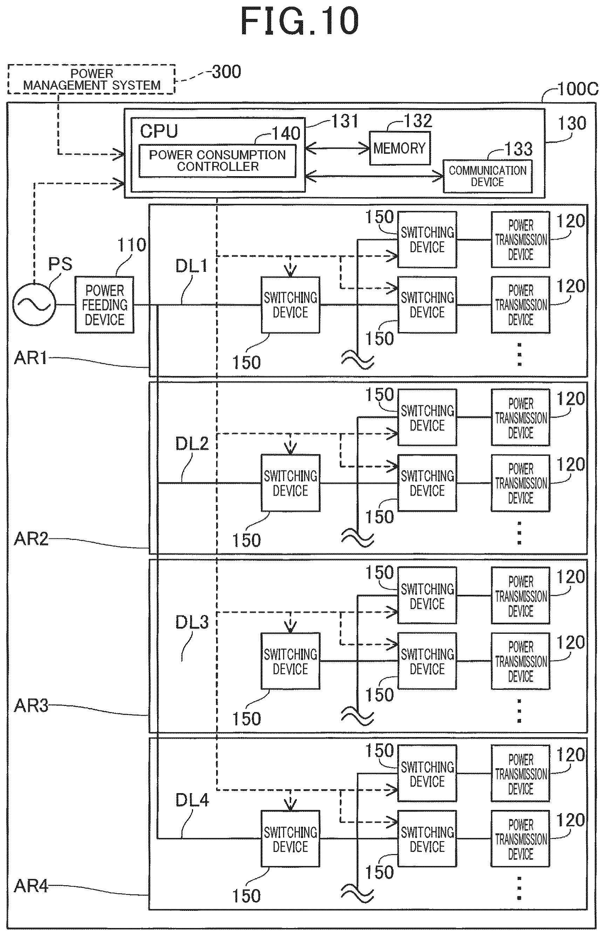

(E2) In the embodiments, the charging system 100 includes one power feeding device 110 for each area, and controls the power supply to each area by controlling the power feeding device 110. However, the present disclosure is not limited to this configuration. The charging system may be, like a charging system 100A illustrated in Fig. 8, configured to include one switching device 150 for each area and one power feeding device 110 installed for each power transmission device 120 in the downstream side of the switching device 150. The switching device 150 is configured as, for example, a switch such as a relay, and is controlled by a power consumption controller 140 and thus executes or stops the power supply to the downstream side of the switching device 150. The switching device 150 corresponds to the "power supply control device" of the present disclosure. Further, the charging system may be, like a charging system 100B illustrated in Fig. 9, configured to include one power feeding device 110 commonly used in the entire charging system 100B, and one switching device 150 for each area. The charging systems 100A and 100B having such configurations exhibit the same effects as the embodiments. Further, the charging system may be, like a charging system 100C illustrated in Fig. 10, configured to include, in addition to the configuration of the charging system 100B, one switching device 150 installed for each power transmission device 120. The charging system 100C having such a configuration can control the supply or the stop of power for each power transmission device 120, and therefore control the amount to be suppressed of the power consumption more precisely. In the charging systems 100A, 100B, and 100C, the power consumption controller 140 may control the power supply to each area by, in addition to controlling the switching device 150, controlling the power feeding device 110 similarly to the embodiments.

(E3) In the embodiments, the electric vehicle 202 is configured as an AGV that is capable of autonomously determining the operation route thereof and is operated in a factory. However, the present disclosure is not limited to this configuration. The electric vehicle 202 may be incapable of autonomously determining the operation route thereof, and be, for example, a mobility vehicle operated only in a route set in advance. Further, the electric vehicle 202 is not limited to the operation in a factory, and may be, for example, a bus operated in an airport or a mobility vehicle operated in a theme park. Further, the charging system 100 is not limited to including the electric vehicle 202 operated only in a specific premise, and may be a system that, in a terminal that an electric vehicle 202 configured as a long-distance truck or bus stops by, charges the electric vehicle 202 parked there, and controls the stop of charging for each area in the terminal. A charging system 100 having such a configuration also exhibits the same effects as the embodiments.

(E4) In the embodiments, the power transmission device 120 includes the power feeding-side controller 20, and is in the power transmission standby state when the power transmission coil 11 is not coupled with the power reception coil 241. However, the present disclosure is not limited to this configuration. The power transmission device 120 may be configured not to include the power feeding-side controller 20 and to be in the power transmittable state while supplied with power by the power feeding device 110. A charging system 100 having such a configuration can also be prevented from having a complicated configuration.

(E5) In the embodiments, the power consumption controller 140 determines the charging stop area according to the switching pattern set in advance. However, the present disclosure is not limited to this configuration. Without depending on the switching pattern, the power consumption controller 140 may, for example, monitor, for each area, the total power consumption of the power transmission devices 120, and determine a highest power-consumption area as the charging stop area when the suppression of power consumption becomes needed. A charging system 100 having such a configuration can also be prevented from having a complicated configuration.

(E6) In the fourth embodiment, the power consumption controller 140 updates the switching schedule, using the charge state information and the operation impact degree information. However, the present disclosure is not limited to this configuration. The power consumption controller 140 may update the switching schedule, using only the charge state information. A charging system 100 having such a configuration can also shorten the charging stop time in an area where an electric vehicle 202 with a battery 210 having little power left is operated, and further suppress the impact on operation of electric vehicles 202 caused by the stop of charging while suppressing the power consumption.

(E7) In the fourth embodiment, the power consumption controller 140 notifies the electric vehicles 202 of the charging stop area. However, the present disclosure is not limited to this configuration. The power consumption controller 140 does not necessarily have to notify the electric vehicles 202 of the charging stop area. A charging system 100 having such a configuration can also shorten the charging stop time in an area where an electric vehicle 202 with a battery 210 having little power left is operated, and further suppress the impact on operation of electric vehicles 202 caused by the stop of charging while suppressing the power consumption. In addition, the charging system having such a configuration can preferentially shorten the charging stop time in an area where an electric vehicle 202 having a high degree of impact on operation when stopped is operated, and further suppress the impact on operation of the electric vehicles 202 caused by the stop of charging while suppressing the power consumption.

The control device 130 and the method thereof described in the present disclosure may be realized by a dedicated computer provided so as to include a processor, which has been programmed to execute one or a plurality of functions embodied by a computer program, and a memory. Alternatively, the control device 130 and the methods thereof described in the present disclosure may be realized by a dedicated computer provided so as to include a processor formed of one or more dedicated hardware logic circuits. Alternatively, the control device 130 and the methods thereof described in the present disclosure may be realized by one or more dedicated computers configured to include a combination of a processor, which has been programmed to execute one or a plurality of functions, and a memory, with a processor formed of one or more hardware logic circuits. The computer program may be, as an instruction to be executed by a computer, stored in a computer-readable non-transitory tangible storage medium.

The present disclosure is not limited to these embodiments, and can be realized by various configurations without departing from the scope of the present disclosure. For example, the technical features in the embodiments corresponding to the technical features in the aspect described in the section of Summary of the Invention can be replaced or combined as appropriate to solve some or all the problems described above, or to achieve some or all the effects described above. Further, the technical feature(s) not described as essential in the present description can be deleted as appropriate.

(Aspect 1)

A charging system (100, 100A, 100B, 100C) for an electric vehicle, the charging system including:

> a system power source (PS) supplied to an operation zone of the electric vehicle;
> a plurality of power distribution lines (DL1, DL2, DL3, DL4) connected to the system power source;
> a plurality of charging devices (120) respectively disposed in a plurality of areas (AR1, AR2, AR3, AR4) that are obtained by dividing the operation zone, and that each have a different distribution line among the power distribution lines, the plurality of charging devices being supplied with power through the plurality of power distribution lines and charging the electric vehicle;
> a power supply control device (110, 150) that is installed in each of the plurality of power distribution lines, and that executes or stops power supply to a downstream side of each of the plurality of power distribution lines; and
> a power consumption controller (140) that acquires information indicating peak power as an upper limit of total power suppliable to the plurality of charging devices, and controls the power supply control device,

the power consumption controller determining, among the plurality of areas, a charging stop area where charging is to be stopped, so that total power consumption of the plurality of charging devices does not exceed the peak power, and controlling the power supply control device to stop the charging by a charging device of the plurality of charging devices that is disposed in the charging stop area.

(Aspect 2)

The charging system according to aspect 1, wherein

at least some of the plurality of charging devices include a power transmission circuit (10) that transmits power to a power reception circuit (240) of the electric vehicle in a wireless manner.

(Aspect 3)

The charging system according to aspect 2, wherein

the power transmission circuit switches between a power transmittable state and a power transmission standby state according to a degree of coupling between the power reception circuit and the charging device.

(Aspect 4)

The charging system according to aspect 2 or 3, wherein

the power consumption controller determines the charging stop area according to a switching pattern that indicates an order of selecting the charging stop area and a time for stopping the charging in the charging stop area, and the order and the time being set in advance.

(Aspect 5)

The charging system according to aspect 4, wherein

the power consumption controller acquires an operation history of the electric vehicle, and updates the switching pattern, using the operation history.

(Aspect 6)

The charging system according to aspect 4, wherein

the power consumption controller:

acquires, out of power consumption in the operation zone, non-charging power consumption information that is information on non-charging-device-based power consumption, and
updates the switching pattern, using the non-charging power consumption information.

(Aspect 7)

The charging system according to aspect 4, wherein

the power consumption controller acquires charge state information that is information sent from the electric vehicle and indicating a charge state of a battery (210) of the electric vehicle, and updates the switching pattern, using the charge state information.

(Aspect 8)

The charging system according to aspect 7, wherein

the power consumption controller:

acquires operation impact degree information that is information set in advance for each of a plurality of the electric vehicles and indicating a degree of impact on operation caused when each of the plurality of the electric vehicles is stopped, and
decreases, using the operation impact degree information, frequency of selecting, as the charging stop area, an area in which an electric vehicle of the plurality of the electric vehicles that has a higher impact degree is operated.

(Aspect 9)

The charging system according to aspect 8, wherein

the plurality of the electric vehicles are configured to be capable of autonomously determining operation routes thereof, and
the power consumption controller notifies the plurality of the electric vehicles of information indicating which area among the plurality of areas has been determined to be the charging stop area and in which the charging by the charging device is stopped.

(Aspect 10)

A computer program for controlling a charging system for an electric vehicle,
the charging system including:

a system power source supplied to an operation zone of the electric vehicle;
a plurality of power distribution lines connected to the system power source;
a plurality of charging devices respectively disposed in a plurality of areas that are obtained by dividing the operation zone, and that each have a different distribution line among the power distribution lines, the plurality of charging devices being supplied with power through the power distribution lines and charging the electric vehicle; and

a power supply control device that is installed in each of the power distribution lines, and that executes or stops power supply to a downstream side of each of the power distribution lines, and

the computer program making a computer implement:

a function of determining, among the plurality of areas, a charging stop area where charging is to be stopped, so that total power consumption of the plurality of charging devices does not exceed peak power as an upper limit of total power suppliable to the plurality of charging devices; and

a function of controlling the power supply control device to stop the charging by a charging device of the plurality of charging devices that is disposed in the charging stop area.

## Claims

1. A charging system (100, 100A, 100B, 100C) for an electric vehicle, the charging system comprising:

a system power source (PS) supplied to an operation zone of the electric vehicle;

a plurality of power distribution lines (DL1, DL2, DL3, DL4) connected to the system power source;

a plurality of charging devices (120) respectively disposed in a plurality of areas (AR1, AR2, AR3, AR4) that are obtained by dividing the operation zone, and that each have a different distribution line among the power distribution lines, the plurality of charging devices being supplied with power through the plurality of power distribution lines and charging the electric vehicle;

a power supply control device (110, 150) that is installed in each of the plurality of power distribution lines, and that executes or stops power supply to a downstream side of each of the plurality of power distribution lines; and

a power consumption controller (140) that acquires information indicating peak power as an upper limit of total power suppliable to the plurality of charging devices, and controls the power supply control device,

the power consumption controller determining, among the plurality of areas, a charging stop area where charging is to be stopped, so that total power consumption of the plurality of charging devices does not exceed the peak power, and controlling the power supply control device to stop the charging by a charging device of the plurality of charging devices that is disposed in the charging stop area.

2. The charging system according to claim 1, wherein at least some of the plurality of charging devices include a power transmission circuit (10) that transmits power to a power reception circuit (240) of the electric vehicle in a wireless manner.

3. The charging system according to claim 2, wherein the power transmission circuit switches between a power transmittable state and a power transmission standby state according to a degree of coupling between the power reception circuit and the charging device.

4. The charging system according to claim 2 or 3, wherein

the power consumption controller determines the charging stop area according to a switching pattern that indicates an order of selecting the charging stop area and a time for stopping the charging in the charging stop area, and the order and the time being set in advance.

5. The charging system according to claim 4, wherein the power consumption controller acquires an operation history of the electric vehicle, and updates the switching pattern, using the operation history.

6. The charging system according to claim 4, wherein the power consumption controller:

acquires, out of power consumption in the operation zone, non-charging power consumption information that is information on non-charging-device-based power consumption, and updates the switching pattern, using the non-charging power consumption information.

7. The charging system according to claim 4, wherein the power consumption controller acquires charge state information that is information sent from the electric vehicle and indicating a charge state of a battery (210) of the electric vehicle, and updates the switching pattern, using the charge state information.

8. The charging system according to claim 7, wherein the power consumption controller:

acquires operation impact degree information that is information set in advance for each of a plurality of the electric vehicles and indicating a degree of impact on operation caused when each of the plurality of the electric vehicles is stopped, and

decreases, using the operation impact degree information, frequency of selecting, as the charging stop area, an area in which an electric vehicle of the plurality of the electric vehicles that has a higher impact degree is operated.

9. The charging system according to claim 8, wherein

the plurality of the electric vehicles are configured to be capable of autonomously determining operation routes thereof, and
the power consumption controller notifies the plurality of the electric vehicles of information indicating which area among the plurality of areas has been determined to be the charging stop area and in which the charging by the charging device is stopped.

10. A computer program for controlling a charging system for an electric vehicle,
the charging system including:

a system power source supplied to an operation zone of the electric vehicle;
a plurality of power distribution lines connected to the system power source;
a plurality of charging devices respectively disposed in a plurality of areas that are obtained by dividing the operation zone, and that each have a different distribution line among the power distribution lines, the plurality of charging devices being supplied with power through the power distribution lines and charging the electric vehicle; and
a power supply control device that is installed in each of the power distribution lines, and that executes or stops power supply to a downstream side of each of the power distribution lines, and
the computer program making a computer implement:

a function of determining, among the plurality of areas, a charging stop area where charging is to be stopped, so that total power consumption of the plurality of charging devices does not exceed peak power as an upper limit of total power suppliable to the plurality of charging devices; and
a function of controlling the power supply control device to stop the charging by a charging device of the plurality of charging devices that is disposed in the charging stop area.

# FIG.1

# FIG.2

# FIG.3

EP 4 693 815 A1

# FIG.4

```
        ┌──────────────────────────┐
        │   POWER CONSUMPTION      │
        │   SUPPRESSION PROCESS    │
        └──────────────────────────┘
                    │
                    ▼
  ┌────────────────────────────────────┐
  │ ACQUIRE PEAK POWER INFORMATION AND │──S100
  │   POWER CONSUMPTION INFORMATION    │
  └────────────────────────────────────┘
                    │
                    ▼         S200
                  ╱─────────────╲
                 ╱      IS        ╲
                ╱  SUPPRESSION OF  ╲    NO
               ╱  POWER CONSUMPTION ╲───────────────────┐
                ╲     NEEDED ?      ╱                    │
                 ╲                 ╱                     │
                  ╲───────────────╱                     │
                    │ YES                               │
                    │           S300                    │          S500
                    ▼                                   ▼
  ┌────────────────────────────────┐   ┌────────────────────────────────┐
  │ DETERMINE CHARGING STOP AREA   │   │   POWER SUPPLY TO ALL AREAS     │
  │ ACCORDING TO SWITCHING PATTERN │   │                                │
  └────────────────────────────────┘   └────────────────────────────────┘
                    │           S400                    │
                    ▼                                   │
  ┌────────────────────────────────┐                   │
  │     STOP POWER SUPPLY TO       │                   │
  │      CHARGING STOP AREA        │                   │
  └────────────────────────────────┘                   │
                    │◄──────────────────────────────────┘
                    ▼
             ┌─────────────┐
             │   RETURN    │
             └─────────────┘
```

# FIG.5

POWER CONSUMPTION
SUPPRESSION PROCESS

ACQUIRE PEAK POWER AND
PRESENT POWER CONSUMPTION — S100

ACQUIRE OPERATION HISTORY
INFORMATION — S110

UPDATE SWITCHING SCHEDULE, USING
OPERATION HISTORY INFORMATION — S120

S200

IS
SUPPRESSION OF
POWER CONSUMPTION
NEEDED ?

NO

YES

DETERMINE CHARGING STOP AREA
ACCORDING TO SWITCHING PATTERN — S300

STOP POWER SUPPLY TO
CHARGING STOP AREA — S400

POWER SUPPLY TO ALL AREAS — S500

RETURN

# FIG.6

POWER CONSUMPTION
SUPPRESSION PROCESS

ACQUIRE PEAK POWER AND
PRESENT POWER CONSUMPTION — S100

ACQUIRE NON-CHARGING POWER
CONSUMPTION INFORMATION — S112

UPDATE SWITCHING SCHEDULE, USING
NON-CHARGING POWER CONSUMPTION
INFORMATION — S124

S200
IS
SUPPRESSION OF
POWER CONSUMPTION
NEEDED ?

NO

YES

DETERMINE CHARGING STOP AREA
ACCORDING TO SWITCHING PATTERN — S300

POWER SUPPLY TO ALL AREAS — S500

STOP POWER SUPPLY TO
CHARGING STOP AREA — S400

RETURN

# FIG.7

POWER CONSUMPTION
SUPPRESSION PROCESS

ACQUIRE PEAK POWER AND
PRESENT POWER CONSUMPTION — S100

ACQUIRE CHARGE STATE
INFORMATION AND OPERATION
IMPACT DEGREE INFORMATION — S114

UPDATE SWITCHING SCHEDULE, USING
CHARGE STATE INFORMATION AND
OPERATION IMPACT DEGREE INFORMATION — S124

S200

IS
SUPPRESSION OF
POWER CONSUMPTION
NEEDED ?

NO

YES

DETERMINE CHARGING STOP AREA
ACCORDING TO SWITCHING PATTERN — S300

STOP POWER SUPPLY TO
CHARGING STOP AREA — S400

NOTIFY ELECTRIC VEHICLES OF
CHARGING STOP AREA — S410

POWER SUPPLY TO ALL AREAS — S500

RETURN

# FIG.8

# FIG.9

# FIG.10

## INTERNATIONAL SEARCH REPORT

| International application No. |
| --- |
| **PCT/JP2024/013404** |

| A. | CLASSIFICATION OF SUBJECT MATTER |
| --- | --- |

*H02J 13/00*(2006.01)i; *H02J 7/00*(2006.01)i; *H02J 50/10*(2016.01)i; *H02J 50/40*(2016.01)i
FI: H02J13/00 311T; H02J13/00 301A; H02J7/00 P; H02J7/00 301D; H02J50/10; H02J50/40

According to International Patent Classification (IPC) or to both national classification and IPC

| B. | FIELDS SEARCHED |
| --- | --- |

Minimum documentation searched (classification system followed by classification symbols)

H02J13/00; H02J7/00; H02J50/10; H02J50/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2015-50853 A (KABUSHIKI KAISHA TOYOTA JIDOSHOKKI) 16 March 2015 (2015-03-16)<br>    paragraphs [0013]-[0020], fig. 2 | 1-10 |
| A | JP 2015-35900 A (IWATSU ELECTRIC CO., LTD.) 19 February 2015 (2015-02-19)<br>    paragraph [0041] | 1-10 |
| A | JP 2021-35171 A (TOSHIBA ENERGY SYSTEM & SOLUTION CORP.) 01 March 2021 (2021-03-01)<br>    paragraph [0047] | 1-10 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 May 2024** | **21 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/013404**

| Patent document cited in search report | Publication date (day/month/year) | Patent family member(s) | Publication date (day/month/year) |
|---|---|---|---|
| JP 2015-50853 A | 16 March 2015 | (Family: none) | |
| JP 2015-35900 A | 19 February 2015 | (Family: none) | |
| JP 2021-35171 A | 01 March 2021 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023061073 A
- JP 2013065265 A